# DEMANDE DE BREVET EUROPEEN

(11) **EP 1 995 057 A1**
(43) Date de publication de la demande: **26.11.2008**
(21) Numéro de dépôt: 07010461.7
(22) Date de dépôt: 25.05.2007
(51) Int. Cl.: B32B 27/32, C09D 11/10, E04F 15/02

(54) **Encre pour support plastique**

(71) Demandeur: Tarkett SAS, 92478 Nanterre Cedex (FR)
(72) Inventeur: Forget, Luc, 9559 Wiltz (LU)
(74) Mandataire: pronovem

(57) **Abrégé**

La présente invention se rapporte à une encre d'impression pour support à base de polymère poly-oléfinique comprenant au moins un liant et au moins un pigment, ledit liant est une cire poly-oléfinique oxydée et émulsionnée dans l'eau, et ayant un taux d'acidité compris entre 28 et 32 mg KOH/g.

## Description

### Objet de l'invention

La présente invention se rapporte à une encre pour film et produit multicouche à base de polymère oléfinique, et se rapporte également à des films et produits multicouche décorés.

### Etat de la technique

Une encre est généralement composée d'un ou plusieurs pigments et d'un liant permettant de mettre en suspension, de transporter, et de fixer le pigment sur le support que l'on veut recouvrir, ou le support sur lequel l'on veut imprimer des motifs. Le choix du pigment et du liant sont essentiels car le pigment détermine le pouvoir colorant de l'encre et le liant détermine, non seulement le mode de séchage de l'encre, mais également les principales caractéristiques (résistance, adhésion...) de la couche d'encre ainsi obtenue.

Habituellement, au mélange pigment-liant sont ajoutés des additifs permettant d'optimiser les caractéristiques de l'encre pendant et après son application. Ils sont aussi utilisés pour faciliter la mise en oeuvre de l'encre et permettent, entre autre, d'accélérer le séchage, d'améliorer le brillant, et/ou d'augmenter la résistance du film d'encre.

Parmi les additifs pour encre, on trouve notamment des agents dispersants, des agents anti-mousses, mais également des cires, des polymères, des épaississants et des plastifiants. Les cires, d'origine animale, végétale ou minérale, permettent de modifier l'état de surface du film d'encre et permettent principalement d'augmenter la résistance au frottement, à l'abrasion et d'améliorer le coefficient de glissement de la couche d'encre. Les polymères, généralement à base de nitrocellulose ou d'éthyle cellulose, permettent d'améliorer les propriétés de la couche d'encre, d'en améliorer son brillant et sa résistance. Ils permettent également d'améliorer le mouillage des pigments. Les épaississants, quant à eux, permettent de corriger la viscosité de l'encre.

La composition d'une encre varie en fonction du support sur lequel elle va être appliquée et du résultat recherché. L'encre doit avoir une bonne cohésion intrinsèque et une bonne adhésion au support. Toutes les encres ne peuvent pas être appliquées sur tous les supports. Bien souvent, les encres communément utilisées ne sont pas appropriées pour leur application sur des films plastiques ou sur des produits multicouche utilisés notamment comme revêtements de surface décoratifs.

L'impression sur films plastiques est difficile du fait que, bien souvent, ces films sont fabriqués à base de polymères non-polaires, et l'application d'une encre nécessite la pose préalable d'un enduit, encore appelé « primaire », ou l'emploi d'un traitement de surface du film, comme par exemple un traitement corona, ce qui a pour inconvénient d'introduire dans le processus de fabrication de tels films plastiques une ou deux étapes supplémentaires.

L'impression de produits multicouche présente, quant à elle, une difficulté supplémentaire ; en effet, un produit multicouche se compose habituellement d'un film plastique, encore appelé couche substrat ou couche de support, sur lequel est disposé un autre film plastique, encore appelé couche supérieure ou couche d'usure. La couche d'usure, qui est habituellement transparente, a pour fonction de protéger la face décorative grâce à sa bonne résistance aux agressions mécaniques et chimiques qui peuvent survenir dans les conditions normales d'utilisation de tels produits multicouche. Généralement, c'est la couche de support qui présente une face décorative sur laquelle est appliquée la couche d'usure. Or, comme l'impression du motif décoratif se fait avant la pose de la couche d'usure, il apparait donc, outre les problèmes d'adhérence entre l'encre et la couche de support, des problèmes d'adhérence entre cette couche d'usure et l'encre. Or l'adhésion entre les couches d'un produit multicouche est un point crucial car elle doit être suffisante pour répondre aux critères les plus exigeants notamment en matière de résistance au trafic du produit final s'agissant d'un revêtement de sol.

Parmi les films plastiques, les films PVC (polychlorure de vinyle) sont très répandus notamment pour la fabrication d'emballage et de conditionnement de tout genre, mais également pour la fabrication de revêtements de sols ou revêtements muraux. Or les produits en PVC présentent l'inconvénient majeur de relarguer dans l'environnement des composés organiques volatiles et des phtalates. C'est pourquoi, de nouveaux produits plus écologiques ont été développés, des produits exempts de chlore, en particulier des produits à base de polymère et copolymère oléfiniques présentant des propriétés thermiques, mécaniques et chimiques sensiblement identiques, des produits qui sont plus faciles à fabriquer, moins chers et plus écologique à fabriquer que les PVC, et qui relarguent moins de composés organiques volatiles. Néanmoins, l'emploi de polymères oléfiniques n'apporte pas de solution au problème d'adhésion de l'encre au film plastique, ni au problème d'adhérence entre couche de support et couche d'usure rencontré dans la fabrication de produits multicouches.

Habituellement, le film poly-oléfinique (ou la couche de support poly-oléfinique s'agissant d'un produit multicouche) devant être décorée, doit subir un traitement de surface avant l'impression du motif de décoration. Il peut s'agir de l'application d'un « primaire » ou d'un traitement physique, en particulier un traitement corona comme le décrit le document FR2836088.

Dans le cas d'un produit multicouche, comme cela est décrit dans le document FR2836088, un promoteur d'adhérence doit être appliqué sur la couche décorative afin d'améliorer l'adhérence entre la couche d'encre et la couche d'usure. Les promoteurs d'adhérence cités dans le document FR2836088 sont des solutions à base de polyoléfines, de polyoléfines chlorées, de polyoléfines chlorées fonctionnalisées hydroxy ou anhydride maléique ou époxy, des solutions à base d'acrylique, de polyesters réticulés ou des solutions à base de silanes.

Pour les produits multicouches, une solution alternative consiste à utiliser une encre adhérente dans laquelle le promoteur d'adhérence fait partie intégrante de l'encre.

Le document EP0604729 décrit une encre adhésive pour l'impression sur un support à base de polymère poly-oléfinique afin d'obtenir des produits tissés ou non-tissés, sous la forme de fibres ou de films. Cette encre comprend un pigment, un liant, et un promoteur d'adhérence. Le liant est soit de l'alcool polyvinylique ou de l'éthylène-vinyle acétate (EVA), des composés utilisés pour leur faculté à former un film, alors que le promoteur d'adhérence est un composé choisi parmi les résines hydrocarbonées, les esters de colophane ou les polyterpènes.

De telles encres adhésives présentent l'inconvénient d'être d'une formulation complexe et de n'être pas suffisamment adhérente au support poly-oléfinique sur lequel elle est appliquée, car en effet, leur formulation représente un compromis entre homogénéité de l'encre et adhérence au support, un compromis en défaveur de leur propriété d'adhérence.

### Buts de l'invention

La présente invention vise à fournir une encre qui ne présente pas les inconvénients de l'état de la technique.

Elle vise en particulier à fournir une encre de composition simplifiée et de mise en oeuvre aisée.

Elle vise également à fournir une encre qui présente une bonne cohésion intrinsèque et une adhérence améliorée au support polyolefinique sur lequel elle est appliquée.

Elle vise de plus à fournir, dans le cas d'un produit multicouche, une encre qui présente une adhérence améliorée à la couche support et/ou à la couche d'usure.

Elle vise en outre à fournir un film, ou un produit multicouche, décoré qui ne présente pas les inconvénients de l'état de la technique.

Elle vise en particulier à fournir un film, ou un produit multicouche, décoré, en polymère oléfinique, présentant une meilleure résistance mécanique face aux agressions physiques.

Elle vise également à fournir un produit multicouche, décoré, en polymère oléfinique, qui présente une meilleure cohésion interne.

### Résumé de l'invention

La présente invention décrit une encre d'impression pour support à base de polymère poly-oléfinique comprenant au moins un liant et au moins un pigment caractérisé en ce que ledit liant est une cire poly-oléfinique oxydée et émulsionnée dans l'eau, et ayant un taux d'acidité compris entre 28 et 32 mg KOH/g.

Le terme « cire » désigne une substance organique ayant des propriétés analogues à celle de la cire d'abeille, à savoir, avoir une forme solide à température ambiante et une forme liquide à plus haute température. Il est généralement admis qu'une telle substance doit avoir une viscosité relativement basse juste au-dessus du point de fusion, qu'elle doit être insoluble dans l'eau, et qu'elle doit être hydrophobe.

Le terme « polymère oléfinique oxydé » désigne un polymère, préparé par polymérisation d'oléfines à partir de monomères oléfiniques, et qui a subi un traitement oxydatif.

Le terme « support » désigne tout support adéquat pour recevoir une encre, en particulier il peut s'agir d'un film plastique.

Selon des formes particulières de réalisation, l'encre comporte l'une ou plusieurs des caractéristiques suivantes :
- le taux d'acidité de la cire poly-oléfinique oxydée est de 30 mg KOH/g.
- la viscosité de l'encre est inférieure à 2000 cps à 25°C.
- la cire poly-oléfinique oxydée est un homopolymère d'éthylène à haute densité oxydé.
- la cire poly-oléfinique oxydée représente en poids entre 9% à 43% du poids total de l'encre.
- la cire poly-oléfinique oxydée représente en poids en poids entre 12% à 33% du poids total de l'encre.
- la cire poly-oléfinique oxydée et émulsionnée représente en poids entre 35% et 96% du poids total de l'encre.
- la cire poly-oléfinique oxydée et émulsionnée représente en poids entre 35% et 83% du poids total de l'encre.
- l'encre comprend en outre au moins un additif choisi parmi le groupe choisi parmi le groupe constitué par un anti-mousse, un épaississant et/ou un surfactant.
- le pourcentage en poids de l'additif ne dépasse pas 10%.
- le pigment est un pigment organique ou inorganique

La présente invention divulgue par ailleurs un support en polymère poly-oléfinique décoré à l'aide de l'encre selon l'invention dans lequel ladite encre est appliquée de façon continue ou discontinue sur au moins une face dudit support.

Selon des formes particulières de réalisation, le support comporte l'une ou plusieurs des caractéristiques suivantes :
- le support est un polymère d'éthylène haute densité.
- le support comprend en outre des charges minérales.

La présente invention divulgue également un produit multicouche décoré à l'aide d'une encre selon l'invention comprenant une couche support à base de polymère poly-oléfinique et une couche d'usure à base de polymère poly-oléfinique, ladite encre étant appliquée de façon continue ou discontinue sur au moins une face de ladite couche de support et/ou de la couche d'usure.

Selon des formes particulières de réalisation, le produit multicouche décoré comporte l'une ou plusieurs des caractéristiques suivantes :
- la couche de support est un polymère d'éthylène, à haute densité.
- la couche de support comprend des charges organiques et/ou minérales.
- la couche d'usure comprend une couche de polymère du type ionomère.
- une couche de polyuréthane est appliquée sur la couche d'usure.
- le produit multicouche est utilisé pour l'élaboration d'un revêtement de sol et/ou d'un revêtement mural.

La présente invention divulgue en outre un procédé de fabrication d'un produit multicouche comprenant une couche de support à base de polymère poly-oléfinique et une couche d'usure à base de polymère poly-oléfinique, ledit procédé comprenant les étapes suivantes :
- Traitement corona d'une face de la couche de support et/ou de la couche d'usure à imprimer
- Application sur au moins une face de la couche de support et/ou de la couche d'usure d'une encre selon l'invention.
- Séchage de l'encre.
- Pose de la couche d'usure sur la couche de support.
- Assemblage de la couche d'usure à la couche de support.

Selon des formes particulières de réalisation, le procédé comporte l'une ou plusieurs des caractéristiques suivantes :
- la couche de support est fabriquée par calandrage et la couche d'usure est fabriquée par soufflage-extrusion.
- le procédé comprend en outre une étape de grainage mécanique de la couche d'usure après son assemblage à la couche de support.

### Brève description des figures

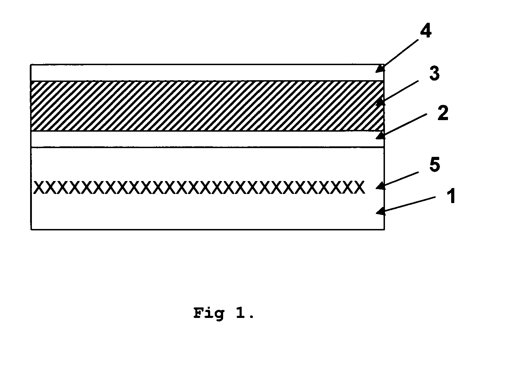

La figure 1 représente un produit multicouche décoré à l'aide de l'encre selon l'invention.

### Description détaillée de l'invention

Les cires poly-oléfiniques oxydées sont connues en elles-mêmes et sont disponibles commercialement. Il s'agit généralement de polymères, homopolymères ou copolymères, obtenus par polymérisation de monomères oléfiniques, qui ont subi une oxydation.

La cire poly-oléfinique oxydée, utilisée comme liant dans l'encre selon la présente invention, présente un degré d'oxydation, qui s'exprime en taux d'acidité, compris entre 28 et 32 mg KOH/g, de préférence un degré d'oxydation moyen de 30 mg KOH/g. L'oxydation de la cire favorise la cohésion du pigment dans l'encre et permet d'obtenir un optimum d'adhésion entre l'encre et le film, ou la couche support, poly-oléfinique d'une part, et d'autre part, entre l'encre et la couche d'usure pour des produits multicouches.

La cire poly-oléfinique oxydée utilisée dans l'encre selon l'invention est un homopolymère d'éthylène à haute densité qui a été oxydé par tout moyen adéquat. En particulier, l'oxydation peut se faire par réaction avec de l'oxygène, ou un gaz contenant de l'oxygène, à des températures se situant entre 140 et 200°C et à des pressions qui varient entre 5 à 200 bars.

Le pigment utilisé dans l'encre selon l'invention peut être toute substance colorée, minérale ou organique, quel qu'en soit la structure ou la nature. Il peut également s'agir de pigments métalliques, iridescents ou perlescents. Il peut également s'agir de mélanges de tels pigments.

Le pigment se présente sous la forme d'une poudre, mais peut également être sous toute autre forme adéquate, et peut également être associé à un dispersant.

La préparation de l'encre se fait de manière conventionnelle, néanmoins, avant l'incorporation du pigment, la cire est préalablement émulsionnée dans de l'eau, la part d'eau variant entre 55 et 75% en poids, de préférence la part d'eau étant de 65% en poids. Ainsi, le pourcentage de matière sèche, c'est-à-dire de cire oxydée solide dans l'émulsion, varie de 25 à 45 % en poids, de préférence le pourcentage de cire oxydée solide est de 35% en poids.

L'encre peut comprendre en outre un ou plusieurs additifs, comme par exemple un composé anti-mousse, un épaississant, un surfactant, qui de préférence sont additionnés à la cire oxydée et émulsionnée avant l'incorporation du pigment. De préférence, la part d'additif ne dépasse pas les 10 % en poids de l'encre final.

De préférence l'encre selon l'invention présente une viscosité inférieure à 2000 cps à 25°C, avantageusement la viscosité se situe entre 300 et 1000 cps à 25°C.

Selon une forme de réalisation particulière, la cire utilisée est un polymère polyéthylène à haute densité (Solewax 403 de la société Ramvers) ayant un taux moyen d'acidité de 30 mg KOH/g, et une viscosité de 3600 cps à 150°C, et qui a été émulsionnée dans de l'eau. De préférence, l'émulsion comprend 55 à 75 % en poids d'eau, avantageusement 65% en poids d'eau.

Les tableaux 1 à 4 donnent des exemples de composition d'une encre selon l'invention.

**Tableau 1 : composition d'une encre blanche.**

| Composé | Pourcentage en poids |
|---|---|
| Cire HDPE oxydée, émulsionnée | 57,4% |
| Blanc à 70% de pigment (Aquapasta White) | 41,0% |
| Anti-mousse (BYK 094) | 0,5% |
| Epaississant (Coatex rheo 2000) | 1,1% |

**Tableau 2 : composition d'une encre métallique.**

| Encre | Composé | Pourcentage en poids | Effet métallique |
|---|---|---|---|
| I | Cire HDPE oxydée, émulsionnée | 71,4% | |
| | | | Très bon |
| | Pigment métallique (Stapa IL hydrolan Aluminium) | 28,6% | |
| II | Cire HDPE oxydée, émulsionnée | 76.9% | |
| | | | Bon |
| | Pigment métallique (Stapa IL hydrolan Aluminium) | 23.1% | |
| III | Cire HDPE oxydée, émulsionnée | 83.3% | |
| | | | Léger |
| | Pigment métallique (Stapa IL hydrolan Aluminium) | 16.7% | |

**Tableau 3 : composition des encres colorées concentrés**

| Encre | Composé | Pourcentage en poids |
|---|---|---|
| Noire | Cire HDPE oxydée, émulsionnée | 55,0% |
| | Pigment (Regal 250R ou Monarch 280) | 15,0% |
| | Dispersant de pigment | 3,0% |
| | Eau | 21,2% |
| | Isopropanol | 5,0% |
| | Surfactant (Surfynol 104 PA) | 0,8% |
| Jaune | Cire HDPE oxydée, émulsionnée | 35,0% |
| | Pigment (Cromophtal Yellow3G) | 35,0% |
| | Eau | 24,2% |
| | Isopropanol | 5,0% |
| | Surfactant (Surfynol 104 PA) | 0,8% |
| Rouge | Cire HDPE oxydée, émulsionnée | 35,0% |
| | Pigment (Cromophtal red BRN ou Cromophtal red 2030) | 35,0% |
| | Eau | 24,2% |
| | Isopropanol | 5,0% |
| | Surfactant (Surfynol 104 PA) | 0,8% |
| Bleu | Cire HDPE oxydée, émulsionnée | 35,0% |
| | Pigment (Irgalite blue GLO) | 35,0% |
| | Eau | 24,2% |
| | Isopropanol | 5,0% |
| | Surfactant (Surfynol 104 PA) | 0,8% |

**Tableau 4 : composition de l'encre incolore.**

| Composé | Pourcentage en poids |
|---|---|
| Cire HDPE oxydée, émulsionnée | 95,7% |
| Anti-mousse (BYK 094) | 0,6% |
| Pré-mélange (1 :1) (Coatex rheo 2000 + Eau) | 3.7% |

L'encre blanche selon l'invention (tableau 1), est obtenue en utilisant un blanc qui comprend 70% de pigment blanc, les 30% restant étant constitué de 90% d'eau et 10% de résine Acrylique. L'encre blanche peut elle-même servir de support pour l'impression d'une ou plusieurs encres de couleur et/ou métalliques, mais elle peut également être mélangée à une ou plusieurs encres colorées, par exemple aux encres du tableau 3. Dans un mélange encre blanche/encre colorée, le pourcentage d'encre colorée représente en poids, de préférence entre 1 et 10 % du poids du mélange total.

De préférence, pour une encre métallique, le pigment utilisé est de l'aluminium enrobé de dioxyde de silicium (Stapa IL hydrolan Aluminium).

L'encre métallique selon l'invention (tableau 2) peut être utilisée pour recouvrir un support à base de polymère poly-oléfinique qui peut être recouvert, ou non, d'une encre blanche, mais peut elle-même servir de support pour l'impression d'une ou plusieurs encres de couleur, ou d'un mélange d'au moins une encre colorée avec l'encre blanche.

Une encre de couleur (tableau 3) selon l'invention peut être utilisée pour imprimer un support à base de polymère poly-oléfinique qui peut être recouvert, ou non, d'une encre blanche ou d'une encre métallique. L'encre de couleur peut être utilisée telle que décrite dans le tableau 3, sous une forme que l'on peut qualifier de « concentrée » pour obtenir une teinte foncée, ou utilisée sous une forme « diluée », c'est-à-dire sous la forme d'un mélange avec l'encre blanche, l'encre métallique, ou bien encore l'encre incolore (tableau 4) afin d'obtenir des teintes plus pâles.

Une encre incolore (tableau 4) peut être utilisée pour recouvrir un support à base de polymère poly-oléfinique qui peut être recouvert, ou non, d'une encre blanche, métallique ou colorée. L'encre incolore, mélangée à une ou plusieurs encres colorées « concentrées » (tableau 3) peut également servir à obtenir des encres « diluées » afin d'obtenir des teintes plus pâles. De préférence, pour une « encre diluée » la proportion en poids d'encre colorée concentrée se situe entre environ 1% et environ 16%.

Ainsi, dans les exemples de compositions d'une encre selon l'invention (tableaux 1 à 4) le pourcentage de cire oxydée et émulsionnée représente entre environ 35 et environ 83% en poids du poids total d'une encre blanche, métallique ou de couleur concentrée et entre environ 86 et environ 89 % en poids du poids total d'une encre de couleur diluée, et environ 96% en poids du poids total d'une encre incolore.

La cire oxydée étant émulsionnée dans 55% à 75% en poids d'eau, le pourcentage de matière sèche de cire oxydée représente en poids entre environ 9% et environ 37% du poids total d'une encre blanche, métallique ou de couleur concentrée et entre environ 21% et environ 40 % en poids du poids total d'une encre de couleur diluée, et environ 43% en poids du poids total d'une encre incolore.

Dans une forme de réalisation particulière de l'invention, la cire oxydée est émulsionnée dans 65% d'eau, ainsi le pourcentage de matière sèche de cire oxydée représente en poids entre environ 12% et environ 29% du poids total d'une encre blanche, métallique ou de couleur concentrée et environ 30% en poids du poids total d'une encre de couleur diluée, et environ 33% du poids total d'une encre incolore.

Toutes les compositions des tableaux 1 à 4 possèdent une adhérence supérieure à 50N/50mm dans un test de résistance au pelage effectué selon la norme européenne n°EN431. En particulier, l'encre blanche comprenant 57,4 % en poids de cire oxydé émulsionnée, une encre métallique à environ 71% en poids de cire oxydé émulsionnée et une encre colorée concentrée à environ 35% de cire oxydé émulsionnée, possèdent une bonne adhésion au support poly-oléfinique tout en ayant un aspect esthétique suffisant.

Les films plastiques, ou les couches de support de produit multicouches, décorés à l'aide d'une ou plusieurs encres selon l'invention, sont de préférence des films, ou des couches support, à base de polymère d'éthylène à haute densité. De préférence, ces films sont obtenus par lamination ou calandrage.

En particulier, comme le montre la figure 1, la couche de support 1 d'un produit multicouche peut être une couche dite compacte ou mousse. Elle peut comprendre des charges organiques et ou minérales destinées à lui conférer des propriétés mécaniques particulières ; Il peut s'agir par exemple de carbonate de calcium ou de magnésium, de sulfate de calcium, de carbonate ou sulfate de baryum, de kaolin, de silice pyrogénée, de graphite expansé, ou de fibre de verre. Dans une forme de réalisation particulière, la couche support est en polyéthylène à basse densité et comprend du carbonate de calcium ainsi qu'un voile de verre 2.

L'encre selon la présente invention peut être appliquée sur au moins une surface du film, de la couche de support 1 ou de la couche d'usure 3, poly-oléfinique par tout moyen adéquate. De préférence, l'encre est appliquée par héliographie, flexographie ou screen. L'application peut se faire de manière continue, sur toute la surface du film, de la couche support 1 ou de la couche d'usure 3, ou de façon discontinue, sur une partie seulement de la surface du film, de la couche support 1 ou de la couche d'usure 3.

La couche d'encre 2, colorée, métallique, blanche ou incolore, présente l'avantage de pouvoir elle-même servir de support pour l'impression d'un motif supplémentaire.

Une fois la couche d'encre 2 appliquée, le film, la couche support 1 ou la couche d'usure 3, ainsi décoré subit un séchage, par exemple par air forcé, par exemple à une température qui peut être comprise entre 20 et 100°C.

La couche d'usure 3 d'un produit multicouche peut être une monocouche ou un multicouche de polymère et peut être élaborée à base de tout polymère adéquat afin de lui conférer une bonne résistance aux agressions mécaniques et chimiques qui surviennent dans les conditions normales d'utilisation de tels revêtements de surface. La couche d'usure peut comprendre une couche en polymère du type ionomère, des copolymères à liaisons ioniques comprenant une chaine oléfinique contenant des groupements latéraux carboxyliques, partiellement ou totalement neutralisés par des cations qui peuvent être des cations métalliques ou des cations d'amines. De préférence, le polymère ionomère est un co-polymère éthylénique.

La couche d'usure 3 est de préférence transparente et son épaisseur est généralement d'au moins 10µm, de préférence 200µm, mais elle peut varier en fonction de différents paramètres tels que la matière utilisée pour l'élaboration de la couche d'usure 3, mais également en fonction des applications auxquelles le produit multicouche est destiné.

La couche d'usure 3 est appliquée par exemple à chaud, avantageusement à une température comprise entre 110 et 120°C, et de manière particulièrement préférée à 115°C, sur la couche de support 1 dont la surface à été préalablement réchauffée, par IR par exemple. L'adhésion entre couche d'usure 3 et couche de support 1 est réalisée par exemple par passage du produit multicouche dans un four à 160°C pendant trois minutes.

Selon une forme de réalisation particulière, la couche d'usure 3 est recouverte d'une couche superficielle de polyuréthane 4 afin de renforcer la résistance à l'usure par abrasion.

Selon une autre forme de réalisation particulière, le produit multicouche peut subir un grainage mécanique.

De préférence, la couche de support 1 ou la couche d'usure 3 d'un produit multicouche peuvent contenir divers additifs permettant notamment d'améliorer ou de modifier les propriétés mécaniques du produit multicouche décoré final.

De préférence, les films décorés avec l'encre selon la présente invention sont utilisés comme emballage, et les produits multicouches décorés sont utilisés comme revêtements muraux ou de sol.

### LEGENDE

1 : couche support
2 : couche d'encre
3 : Couche d'usure
4 : Couche de polyuréthane
5 : voile de verre

## Revendications

1. Encre d'impression pour support à base de polymère poly-oléfinique comprenant au moins un liant et au moins un pigment **caractérisé en ce que** ledit liant est une cire poly-oléfinique oxydée et émulsionnée dans l'eau, et ayant un taux d'acidité compris entre 28 et 32 mg KOH/g.

2. Encre selon la revendication 1 dans laquelle le taux d'acidité de la cire poly-oléfinique oxydée est de 30 mg KOH/g.

3. Encre selon l'une quelconque des revendications précédentes dans laquelle la viscosité de ladite encre est inférieure à 2000 cps à 25°C.

4. Encre selon l'une quelconque des revendications précédentes dans laquelle la cire poly-oléfinique oxydée est un homopolymère d'éthylène à haute densité oxydé.

5. Encre selon l'une quelconque des revendications précédentes dans laquelle la cire poly-oléfinique oxydée représente entre en poids 9% à 43% du poids total de l'encre.

6. Encre selon la revendication 5 dans laquelle la cire poly-oléfinique oxydée représente en poids entre 12% à 33% du poids total de l'encre.

7. Encre selon l'une quelconque des revendications 1 à 4 dans laquelle la cire poly-oléfinique oxydée et émulsionnée représente en poids entre 35% et 96% du poids total de l'encre.

8. Encre selon la revendication 7 dans laquelle la cire poly-oléfinique oxydée et émulsionnée représente en poids entre 35% et 83% du poids total de l'encre.

9. Encre selon l'une quelconque des revendications précédentes comprenant en outre au moins un additif choisi parmi le groupe constitué par un anti-mousse, un épaississant et/ou un surfactant.

10. Encre selon la revendication 9 dans laquelle le pourcentage en poids de l'additif ne dépasse pas 10%.

11. Encre selon l'une quelconque des revendications précédentes dans laquelle le pigment est un pigment organique ou inorganique.

12. Support en polymère poly-oléfinique décoré à l'aide de l'encre selon l'une quelconque des revendications 1 à 11 dans lequel ladite encre est appliquée de façon continue ou discontinue sur au moins une face dudit support.

13. Support décoré selon la revendication 12 dans lequel ledit support est un polymère d'éthylène haute densité.

14. Support décoré selon les revendications 12 ou 13 dans lequel ledit support comprend en outre des charges organiques et/ou minérales.

15. Produit multicouche décoré à l'aide d'une encre selon l'une quelconque des revendications 1 à 11, ledit produit multicouche comprenant une couche support (1) à base de polymère poly-oléfinique et une couche d'usure (3) à base de polymère poly-oléfinique, dans lequel la dite encre est appliquée de façon continue ou discontinue sur au moins une face de ladite couche de support (1) et/ou de ladite couche d'usure (3).

16. Produit multicouche selon la revendication 15 dans lequel la couche de support (1) est un polymère d'éthylène à haute densité.

17. Produit multicouche selon l'une quelconque des revendications 15 ou 16 dans lequel la couche de support (1) comprend des charges minérales.

18. Produit multicouche selon l'une quelconque des revendications 15 à 17 dans lequel la couche d'usure (3) comprend une couche de polymère du type ionomère.

19. Produit multicouche selon l'une quelconque des revendications 15 à 18 dans lequel une couche de polyuréthane (4) est appliquée sur la couche d'usure (3).

20. Utilisation du produit multicouche selon l'une quelconque des revendications 15 à 19 pour l'élaboration d'un revêtement de sol et/ou d'un revêtement mural.

21. Procédé de fabrication d'un produit multicouche comprenant une couche de support (1) à base de polymère poly-oléfinique et une couche d'usure (3) à base de polymère poly-oléfinique, ledit procédé comprenant les étapes suivantes :
- Traitement corona d'une face de ladite couche de support (1) et/ou de ladite couche d'usure (3) à imprimer
- Application sur au moins une face de ladite couche de support (1) et/ou de ladite couche d'usure (3) d'une encre selon l'une quelconque des revendications 1 à 11.
- Séchage de ladite encre.
- Pose de ladite couche d'usure (3) sur ladite couche de support (1).
- Assemblage de ladite couche d'usure (3) à ladite couche de support (1) .

22. Procédé selon la revendication 21 dans lequel la couche de support (1) est fabriquée par calandrage et la couche d'usure (3) est fabriquée par soufflage-extrusion.

23. Procédé selon l'une quelconque des revendications 21 ou 22 comprenant en outre une étape de grainage mécanique de la couche d'usure (3) après son assemblage à la couche de support (1).
